# EUROPEAN PATENT APPLICATION

(11) **EP 1 029 450 A2**
(43) Date of publication of application: **23.08.2000**
(21) Application number: 00200354.9
(22) Date of filing: 04.02.2000
(51) Int. Cl.: A01K 27/00

(54) **Collar for a cat or dog, the material of said collar containing certain active substances, and method of manufacturing such a collar**

(30) Priority: 18.02.1999 NL 1011336
(71) Applicant: Beaphar B.V., 8102 EV Raalte (NL)
(72) Inventor: Aa, Johannes Henricus Lifgerus, 1077 AA Amsterdam (NL)
(74) Representative: Lips, Hendrik Jan George, Ir.

(57) **Abstract**

Collar for a cat or dog, in which said collar contains certain active substances for protection against fleas, ticks, lice and other insects. In particular, ivermectine is employed as the active substance. This substances kills worms in particular, such as round-worms.

When manufacturing such a collar, the substance ivermectine in liquid or powder form can be added to said collar.

## Description

The invention firstly relates to a collar for a cat or dog, in which said collar contains certain active substances for protecting the animal against fleas, ticks, lice and other insects.

Almost everyone knows the so-called "flea collar" which is put around the neck of a cat or dog in order to kill fleas, ticks, lice and other insects so that the cat or dog concerned will suffer no inconvenience from it. To that end, the material of the collar contains an insecticide with which the insects present in the fur of the animal will be contacted and thus will die.

However, when the cat or dog suffers from worms, such as round-worms (Nematoda), other means should be employed to remove these. Then, certain substances, particularly in the form of pills or drops, will be administered to the animal. Now some animals are very choosy about the food they get. In such a case, one can not be sure that the animal concerned has actually swallowed the pills or drops added to the food. This difficulty increases if one has more pet animals.

The object of the invention is to remove these difficulties and to that end provides for, that especially the substance ivermectin is contained in the material of the collar, which substance kills worms in particular, such as round-worms (Nematoda).

Although it is known per se that said substance kills insects such as round-worms, surprizingly it has turned out that it is not necessary to administer the substance as part of the food. Incorporating the substance into the known flea collar is sufficient and does not affect the desired action of the substance.

When using such a flea collar, said added substance ivermectine is gradually released and through the skin it will get into the bloodstream of the animal provided with the collar. Therefore, the collar concerned provides protection against fleas, ticks, lice and other insects and against worms.

The invention also relates to a method of manufacturing the above-mentioned collar in which it is provided for, that the substance ivermectine in liquid or powder form is added to the material of a collar known per se.

## Claims

1. Collar for a cat or dog, in which said collar contains certain active substances for protecting the animal against fleas, ticks, lice and other insects, characterized in that the substance ivermectine is incorporated in the material of a collar, said substance killing worms in particular, such as round-worms.

2. Method of manufacturing a collar for a cat or dog, characterized in that the substance ivermectine in liquid or powder form is added to the material of a collar known per se.
